# EUROPEAN PATENT APPLICATION

(11) **EP 1 116 704 A1**
(43) Date of publication of application: **18.07.2001**
(21) Application number: 00200077.6
(22) Date of filing: 11.01.2000
(51) Int. Cl.: C04B 35/565, C04B 35/584

(54) **Nanocomposite dense sintered silicon carbonitride ceramic cutting tool**

(71) Applicant: Metalloceramica Vanzetti S.p.A., 20139 Milan (IT); H.C. Starck GmbH & Co. KG, 38642 Goslar (DE)
(72) Inventor: Ferrari, Alberto, 20141 Milano (IT); Pedrazzi, Giorgio, 20152 Milano (IT); Schwier, Gerd, 38640 Goslar (DE); Schmitz, Heinz Withold, 79761 Waldshut (DE); Morrell, Roger, Teddington, Middlesex TW11 8DH (GB); Martelli, Stefano, 00133 Roma (IT)
(74) Representative: De Gregori, Antonella

(57) **Abstract**

The present invention discloses a nanocomposite dense sintered silicon carbonitride ceramic cutting tool, obtainable by cold pressing a spray-dried flowable granulate of a nanosized powder of α-Si₃N₄ and SiC, containing an amount lower than 30% of nanosized SiC particles, in the presence of sintering aids and further additives, by sintering the so obtained pressed product at a temperature of from 1800°C to 1900°C, for a time of from 0.5 to 2 hours and with an over-pressure of inert gas and by machining the cutting tool.

## Description

The present invention relates to a nanocomposite dense sintered silicon carbonitride ceramic cutting tool.

The majority of existing commercial cutting tools and wear components are based on tungsten carbide cemented with cobalt. The modern day-need for a higher cutting productivity at lower production costs has brought continuous adjustments in composition and grain size distribution of the required starting powders and to the development of protective multilayer coatings based on titanium carbide, titanium nitride and aluminium oxide materials.

Cemented carbides, however, lack the high-temperature strength required for higher speed cutting, especially without the use of suitable cooling agents. Potential and even cheaper substitutes, using more readily available raw materials, can be oxide and nitride ceramics, but so far they have been successfully applied only in niche markets because of their limited properties of strength and toughness.

In addition, metal cutting operations in the automotive, steel working and machinery industries have experienced innovations and progress under the driving force of technological development in the machine tool industry and in response to new demands from the end-users. In fact, a new generation of machine tools has been developed with improved characteristics in terms of stability, stiffness and multipurpose design in relation to their application in Computer Numerically Controlled (CNC) systems. Such tools allow operations to be carried out under cutting conditions, particularly depth of cut and speed, which were not previously achievable.

The possibility of successfully using ceramics in such systems for a wide range of operations requires improved properties in terms of hardness, toughness, fracture toughness, high-temperature characteristics and thermal shock resistance.

Conventional ceramics, possessing rather limited values of toughness, flexural strength, thermal conductivity and hardness at high temperature, show poor adaptability with respect to a wider range of applications as cutting tool products. They are only suitable for machining steel and iron workpieces of relatively low hardness at high cutting speed with very rigid machine tools.

Silicon nitride ceramics can be considered as leading candidates for applications where high temperatures are developed, owing to their ability to operate under severe conditions.

However, because of the tendency of silicon nitride to dissociate at high temperatures, silicon nitride ceramics generally cannot be made as sintered shapes without the addition of other oxides or nitrides to assist the formation of a liquid phase at appropriately reduced sintering temperatures.

In addition, it is known that silicon nitride exists in two related phase modifications both capable of accepting other metallic ions in solid solutions. Both the high temperature β form, which is normally produced by hot pressing or sintering, and the low temperature α form, allow a wide range of solid solutions with alumina, yttria and various other oxide species to be obtained.

Typically therefore, silicon nitride ceramics are complex materials containing a number of phases in addition to silicon nitride or a silicon nitride solid solution.

In fact, conventionally, silicon nitride ceramics used for cutting tools may contain either β-Si₃N₄ or a mixture of α- and β-Si₃N₄ together with densification aids.

Improvements in hardness derive either from the inclusion of α-Si₃N₄ or from additional hard particles, as for example SiC. Such materials, however, have restricted sinterability owing to the inertness of SiC, and restricted applicability to machining iron-based metal alloys because of interactions between SiC and Fe.

Therefore, it is known that the hardness and/or toughness of silicon nitrides can be improved for cutting tool purposes by the inclusion of substantial amounts of a dispersoid phase such as TiC or HfC, but such materials normally need to be mechanically hot-pressed (e.g. Buljan, S.T.; Wayne, S.F., Adv. Ceram. Mater. 2[4] (1987), 813-6), which is not economically viable. Niihara et al. (for example in J. Ceram. Soc. Japan, Intl. Edn. 99 (1991), pp. 945-52) disclosed that some advantages may be generally obtained in ceramic materials by employing a nanocrystalline structure (grain size lower than 200 nm across), which may also have the benefit of improving strength and toughness over conventional ceramics.

Because of the fine particle size distribution and high surface area/volume ratio, the powders to be employed for such materials are expected to be sinterable at lower temperatures, maintaining the nanophase microstructure. The dispersion of a second hard phase, like silicon carbide, in nanocrystalline size may enhance the strengthening and toughening mechanisms if the grain size is lower than a critical value, as disclosed for example in JP 6340494. The potential application of such materials to cutting tools has been claimed in JP 4294903 and JP 4294908, but said products require mechanical hot pressing.

The main purpose of the present invention is to overcome the drawbacks of the known prior art, particularly through the optimization of the composition characteristics of a family of nanocomposite silicon nitride based ceramic materials to be used in high-efficiency cutting tools and other applications with improved performance, and through the optimization of the process conditions for preparing said ceramic material cutting tools.

The object of the present invention is a nanocomposite dense sintered silicon carbonitride ceramic cutting tool, obtainable by cold pressing a spray-dried flowable granulate of a nanosized powder of α-Si₃N₄ and SiC, containing an amount lower than 30% of nanosized SiC particles, in the presence of sintering aids and further additives, by sintering the so obtained pressed product at a temperature of from 1800°C to 1900°C, for a time of from 0.5 to 2 hours and with an over-pressure of inert gas and by machining the cutting tool from the sintered blank.

The object of the present invention is also a process for preparing a nanocomposite dense sintered silicon carbonitride ceramic cutting tool, characterised by the following steps:
a) cold pressing a spray-dried flowable granulate of a nanosized powder of α-Si₃N₄ and SiC, containing an amount lower than 30% of nanosized SiC particles, in presence of sintering aids and further additives,
b) sintering the so obtained pressed product at a temperature of from 1800°C to 1900°C, for a time of from 0.5 to 2 hours and with an over-pressure of inert gas and
c) machining the so obtained blank into the cutting tool.

A further object of the present invention is the use of the cutting tools of nanocomposite dense sintered silicon carbonitride ceramics, obtainable by cold pressing a spray-dried flowable granulate of a nanosized powder of α-Si₃N₄ and SiC, containing an amount lower than 30% of nanosized SiC particles, in presence of sintering aids and further additives, by sintering the so obtained pressed product at a temperature of from 1800°C to 1900°C, for a time of from 0.5 to 2 hours and with an over-pressure of inert gas, and by machining the cutting tool, for machining Fe-based and other alloys.

A further object of the present invention is the use of the cutting tool for metal cutting operations in the automotive, steel working and machinery industries.

In particular, the α-Si₃N₄ and SiC particles present an effective diameter lower than 200 nm after sintering.

In fact, using nanosized (<200 nm ) particles of α-Si₃N₄ and SiC enhanced sinterability of the pressed blanks has been achieved, yielding, after sintering with the assistance of a raised pressure of nitrogen gas, products with a high density, high strength and improved lifetime in machining trials using cast iron and other Fe containing materials, compared with conventional silicon nitride cutting tools.

In particular, the further additives are appropriately selected temporary binders such as various grades of polyethylene glycol having molecular weight ranging from 400 to 12000, with or without other organic based materials well known in the art.

A cutting tool according to the present invention presents a hardness ranging of from 1550 to 1800 HV5, Palmqvist toughness ranging of from 6.0 to 7.5 Mpa m^{1/2} and flank wear pattern, described in terms of the flank wear scar depth, VB max, as large as 0.50 to 2.00 mm when machining cast iron GG15 at 1000 m/min for 700 s before the tool has to be rejected on working finish quality grounds.

Therefore, the present invention relates to the production of α silicon nitride ceramics containing silicon carbide particles, fully densified by gas-pressure assisted sintering process to yield products for use as cutting tools and any other articles requiring a combination of hardness, toughness and wear resistance.

Different methods of powder production and mixing can be used to obtain an intimately mixed, nanosized (<200 nm mean particle size) α-Si₃N₄ and SiC powder for nanocomposite ceramic production.

In particular, according to the present invention, the addition of silicon carbide to silicon nitride can be carried out using at least three fundamentally different routes: carbothermal reaction in a nitrogen atmosphere; blending of silicon nitride and silicon carbide prepared separately by conventional methods; blending of nanosized silicon carbide or silicon carbonitride prepared by laser gas-phase synthesis with conventionally prepared silicon nitride.

Whichever method is chosen, sintering aids are also added and the mixture is intensively milled to prepare a nanosized powder suitable for the production of ceramic parts. Optional further additives to aid processing may be added before or after milling.

The carbothermal reaction in a nitrogen atmosphere is disclosed for example by WO 95/28366 (Dow Chemical). It teaches that an intimately mixed silicon nitride/silicon carbide composite powder of sub micrometre particle size can be manufactured via a route involving the carbothermal reduction of silica.

In order to obtain a cost-effective manufacture of ceramic cutting tools and other parts, fast semiautomatic production of near net shape items must be possible, and this requires that sintering is employed, rather than hot pressing.

A very wide range of sintering aids is effective with silicon nitride and allows to produce at high density and high strength the conventional silicon carbonitride products. Usual sintering aids are metal oxides, particularly oxides of light elements or of rare earths, and they are added in sufficient quantity to achieve the density required under the chosen sintering conditions.

According to the present invention, any combination of sintering aids in appropriate proportions may be used, provided that densities close to the theoretical full density are achieved in order to maximise the strength of the cutting tools.

Particularly, preferred sintering aids are Y₂O₃ and Al₂O₃, both added in an amount ranging of from 3 to 6%.

After the addition of suitable temporary binders and typically spray drying to form a flowable granulate, green parts can be prepared by pressing the granulate in conventional uniaxial or isostatic presses using suitable tooling. For the preparation of cutting tools meeting the dimensional specifications laid down in the standard ISO products, hard metal dies of appropriate geometry and dimensions are used such that the parts after sintering are of dimensions larger, by a controlled amount, than the required final tool dimensions in order to allow for machining to precise final dimensions.

The green parts are sintered at high temperature, typically in the range of from 1800°C to 1900 °C, for a period of from 0.5 h to 2 h, under an overpressure of inert gas.

The inert gas, necessary to reduce the risk of dissociation of silicon nitride, can be nitrogen or argon. The so fired parts have densities which are close to the theoretical maximum, that is, they contain little or no porosity, possess high strength, and have a fine grain structure of silicon nitride grains, a secondary phase derived from the sintering aids, and a dispersion of nanosized silicon carbide grains which may reside between or within silicon nitride grains.

In particular, in the nanocomposite dense sintered silicon carbonitride ceramic cutting tool according to the present invention, the nanosized particles of SiC are distributed in a sub micrometre matrix of α-Si₃N₄ or both the dispersed SiC and the matrix α-Si₃N₄ are of nanometre size.

Optionally, the cutting tool inserts obtained in accordance with the present invention may also be coated with a refractory coating for improved wear resistance. TiC, TiN and Al₂O₃ coatings may be applied alone or in combination with each other, using conventional CVD or PVD methods.

When used as cutting tools, the ceramic materials according to the present invention show excellent performance compared with conventionally prepared and sintered micrometre grain size silicon nitrides, not presenting the reinforcement of silicon carbide. For example, the wear scar produced in using the material as a cutting tool is smoother than in conventional silicon nitrides.

Furthermore, whereas silicon carbide itself reacts extensively with iron-based metals and alloys during machining operations, and therefore normally cannot be used as an effective cutting tool, very surprisingly, the nanocomposite dispersion of silicon carbide in silicon nitride enhances rather than degrades the cutting performance of silicon nitride.

Therefore, the main advantage of the cutting tools according to the present invention, is that they have both enhanced breakage resistance and wear resistance with respect to the prior art products.

A further great advantage of the cutting tools according to the present invention is that, together with properties of enhanced breakage resistance and wear resistance, they present also high density, high strength and improved lifetime in machining trials.

Furthermore, the preparation through cold pressing also allows the production of very economical cutting tool with respect to the products according to the state of the art.

The following examples are provided for a better illustration of the present invention.

### Example 1

Three parts of α-silicon nitride having a particle size lower than 1 micrometre manufactured by conventional nitration of silicon powder, are mixed with one part of silicon carbide manufactured by conventional carbothermal reduction of silica. In addition, conventional reagent grade yttrium oxide and aluminum oxide are added in an amount of 4.5 % by weight of the mixture. The total mass is then intensively milled in a silicon nitride lined attritor mill for one hour using demineralized water as a liquid vehicle. 3% by weight of polyethylene glycol having a molecular weight ranging of from 400 to 12000 was added as a binder. The suspension was then spray-dried to produce a flowable granulate suitable for pressing into pre-ceramic shapes.

These shapes were then fired under nitrogen gas with raised pressure at a maximum temperature of 1850 °C for one hour.

After analysis and characterisation, the product was found to be fully dense (nearly 100% of the theoretical full density) and pore free. The product was found to have the following characteristics :
Density, g/cc : 3.26;
Hardness, HV5 : 1785 ± 25;
Palmqvist toughness, MPa m^{1/2}, based on HV5 indentations: 7.0 ± 0.7;
Flexural strength, MPa, using 180 grit ground surface and four-point bending in accordance with the standard methods for specimen size B described in ASTM C1161 and
EN 843-1 : 820 ± 130.

Edge chipping resistance, defined as the load required to cause chipping of a square edge by a Rockwell diamond indenter divided by the distance of indentation from the edge, in N/mm :
850 ± 50;
Si₃N₄ grain size, mean linear intercept method according to ASTM E112 or CEN ENV 623-3: < 0.3 µm.

### Example 2

Silicon and carbon were used as starting raw materials; this mixture was heated under nitrogen atmosphere to obtain a reaction product comprising a mixture of silicon nitride and silicon carbide in a ratio of approximately 3:1 by mass. The reaction product was broken up using a hammer mill and then intensively milled with sintering aids as in Example 1. Using the same procedure as disclosed in Example 1, a product with near identical characteristics was produced.

### Example 3

A mixture of silane and ethylene gases was fed to a reaction chamber operating at a pressure significantly below the atmospheric pressure. A CO₂ laser with a power of approximately 600 W was used to catalyse the reaction between the gases to produce SiC of controlled composition. The resulting powder was essentially amorphous as shown by X-ray diffraction and possessed a mean particle size of about 20 nm. This powder was mixed with silicon nitride powder in a ratio of 1:3 by mass, and sintering aids were added as in Example 1. The mixture was intensively milled to produce a powder with a mean particle size of less than 200 nm. The binder addition, the pressing and the firing conditions were the same of Example 1. The resulting fired product had the following characteristics:
Hardness, HV5 : 1552 ± 26;
Palmqvist toughness, MPa m^{1/2}, based on HV5 indentations: 6.5 ± 0.7;
Density: >98.5% of the theoretical maximum; Si₃N₄ grain size: < 0.3 µm.

The significant advantages of the ceramics according to the present invention are clearly show by the following examples of cutting tool applications which are intended to be illustrative of the present invention.

### Example 4

Cutting tool inserts of ISO style SNGN 120416-T2 and CNGN 120416-T2 have been manufactured using the product obtained according to Example 1.

Special care was taken to adjust the size of the pressing die and the pressing pressure to the shrinkage characteristics of the powder during firing, such that slightly oversized cutting tool blanks were produced appropriate for the accurate diamond grinding of the standard tool geometry. Grinding was performed using commercial programmed grinding machines with diamond grinding wheels.

Both types of inserts have been then tested in comparison with commercially available ceramic cutting tools obtained according to the state of the art, on a cast iron workpiece material intended for use as vehicle engine flywheels, representing a very important large volume application in the automotive industry.

The machining conditions of the trial were the following:

| | |
|---|---|
| workpiece | flywheel; |
| work material | grey cast iron; |
| hardness | 200 HB; |
| cutting operation | longitudinal discontinuous wet turning; |
| cutting speed | 330 m/min; |
| feed rate | 0.40 mm/rev; |
| depth of cut | 2 - 5 mm. |

The results of this test indicated that the product according to the present invention showed performance improved by 50% or more compared with than the conventional silicon nitride material, obtaining a greater number of components with the required accuracy of dimensions and quality of surface finishing. Although the rate of tip wear in the products of the present invention, in terms of Vbₘₐₓ, is similar to that produced in the prior art products not containing silicon carbide, the nanocomposite structure according to the present invention, achieved a much smoother wear scar, which permitted a longer period of use.

Thus, in this roughing turning operation on cast iron under the above indicated conditions, the combination of fine grain size with nanosized silicon carbide reinforcement shows considerably longer life based on workpiece finish quality compared with the prior art.

### Example 5

Cutting tool inserts of the ISO style SNGN 120716-T2 have been manufactured using the densified products of Example 1.

This product has been tested in the manufacture of cast iron brake disk workpieces in comparison with cutting tool products of the state of art, representing a very important large volume application in the automotive industry.

The machining conditions of the trial were the following:

| | |
|---|---|
| workpiece | brake disk; |
| work material | cast iron (GG25); |
| hardness | 215 HB; |
| cutting operation | longitudinal roughing dry turning; |
| cutting speed | 260 - 425 m/min; |
| feed rate | 0.45 mm/rev; |
| depth of cut | 2.0 - 2.5 mm. |

The results of this second test indicated that the nanocomposite cutting tools obtained according to the present invention outperformed the conventional silicon nitride materials obtaining more than double the number of components machined before requiring replacement. Also, as demonstrated in this test of rough turning on cast iron, the products of the present invention have both enhanced breakage resistance and wear resistance over the prior art.

As previously indicated, optionally, the cutting inserts in accordance with the present invention may also be coated with a refractory coating for improved wear resistance. It is contemplated that TiC, TiN and Al₂O₃ coatings may be applied alone or in combination with each other, using conventional CVD or PVD methods.

## Claims

1. A nanocomposite dense sintered silicon carbonitride ceramic cutting tool, obtainable by cold pressing a spray-dried flowable granulate of a nanosized powder of α-Si₃N₄ and SiC, containing an amount lower than 30% of nanosized SiC particles, in the presence of sintering aids and further additives, by sintering the so obtained pressed product at a temperature of from 1800°C to 1900°C, for a time of from 0.5 to 2 hours and with an over-pressure of inert gas and by machining the cutting tool from the sintered blank.

2. A cutting tool according to claim 1, characterised in that it is a cutting tool for machining Fe-based and other alloys.

3. A cutting tool according to claim 1, characterised in that it presents a hardness ranging of from 1550 to 1800 HV5, Palmqvist toughness ranging of from 6.0 to 7.5 Mpa m^{1/2} and flank wear pattern, described in terms of the flank wear scar depth, VB max, as large as 0.50 to 2.00 mm when machining cast iron GG15 at 1000 m/min for 700 s.

4. A cutting tool according to claim 1, characterised in that the SiC particles present an effective diameter lower than 200 nm after sintering.

5. A cutting tool according to claim 1, characterised in that in the nanocomposite dense sintered silicon carbonitride ceramic, the nanosized particles of SiC are distributed in a sub micrometre matrix of α-Si₃N₄.

6. A cutting tool according to claim 1, characterised in that the sintering aids are metal oxides, preferably of light elements or of rare earths.

7. A cutting tool according to claim 1, characterised in that the sintering aids are Y₂O₃ and Al₂O₃, both added in an amount of from 3 to 6%.

8. A cutting tool according to claim 1, characterised in that the nanosized powder of α-Si₃N₄ and SiC is prepared by carbothermal reaction in a nitrogen atmosphere, followed by the addition of sintering additives and by an intensive milling.

9. A cutting tool according to claim 1, characterised in that the nanosized powder of α-Si₃N₄ and SiC is prepared by mixing silicon nitride and silicon carbide prepared separately by conventional methods, followed by the addition of sintering additives and by an intensive milling.

10. A cutting tool according to claim 1, characterised in that the nanosized powder of α-Si₃N₄ and SiC is prepared by mixing nanometre sized silicon carbide or silicon carbonitride prepared by laser gas-phase synthesis with conventionally prepared silicon nitride, followed by the addition of sintering additives and by an intensive milling.

11. A cutting tool according to claim 1, characterised in that in the nanocomposite dense sintered silicon carbonitride ceramic, both the dispersed SiC and the matrix α-Si₃N₄ are of nanometre size.

12. A cutting tool according to claim 1, characterised in that the cutting tool is coated with a refractory coating.

13. A cutting tool according to claim 12, characterised in that the refractory coating is a TiC, TiN and/or Al₂O₃ coating, applied alone or in combination with each other.

14. A process for preparing a nanocomposite dense sintered silicon carbonitride ceramic cutting tool, according to the preceding claims, characterised by the following steps:
a) cold pressing a spray-dried flowable granulate of a nanosized powder of α-Si₃N₄ and SiC, containing an amount lower than 30% of nanosized SiC particles, in the presence of sintering aids and further additives,
b) sintering the so obtained pressed product at a temperature of from 1800°C to 1900°C, for a time of from 0.5 to 2 hours and with an over-pressure of inert gas and
c) machining the so obtained blank into a cutting tool.

15. Use of the cutting tool according to claim 1, for machining Fe-based and other alloys.

16. Use of the cutting tool according to claim 1, for metal cutting operations in the automotive, steel working and machinery industries.
